# EUROPEAN PATENT APPLICATION

(11) **EP 4 693 631 A1**
(43) Date of publication of application: **11.02.2026**
(21) Application number: 24780926.2
(22) Date of filing: 29.03.2024
(51) Int. Cl.: H01M 50/105, H01G 11/78, H01M 50/124, H01M 50/147, H01M 50/148, H01M 50/474

(54) **POWER STORAGE DEVICE AND PROTECTIVE MEMBER FOR POWER STORAGE DEVICE**

(30) Priority: 29.03.2023 JP 2023054425; 28.06.2023 JP 2023106540
(71) Applicant: Dai Nippon Printing Co., Ltd., Tokyo 162-8001 (JP)
(72) Inventor: MIYASHIRO, Kae, Tokyo 162-8001 (JP); URIU, Toshibumi, Tokyo 162-8001 (JP); KANAZAWA, Sayako, Tokyo 162-8001 (JP); SASAKI, Miho, Tokyo 162-8001 (JP)
(74) Representative: Müller-Boré & Partner Patentanwälte PartG mbB
(86) International application number: PCT/JP2024/013387
(87) International publication number: WO 2024/204834

(57) **Abstract**

This power storage device comprises: an electrode body having a three-dimensional shape including ridge lines; an exterior film covering at least one of the ridge lines and wrapping around the electrode body; and a protective member that is disposed outside of the electrode body and runs along at least one of the ridge lines.

## Description

### Technical Field

The present invention relates to an electrical storage device and a protective member for an electrical storage device.

### Background Art

PTL 1 discloses an all-solid-state battery as an example of an electrical storage device. The all-solid-state battery includes an all-solid-state battery laminate, an electrode terminal, and an outer packaging that seals the all-solid-state battery laminate. The outer packaging includes a strip-shaped member made of a film and wound around the all-solid-state battery laminate to have opening parts and lids disposed at the opening parts. The electrode terminal is electrically connected to the all-solid-state battery laminate.

### Citation List

### Patent Literature

PTL 1: Japanese Patent Laid-open Publication No. 2019-153504

### Summary of Invention

### Technical Problem

In the electrical storage device as disclosed in PTL 1, the strip-shaped member made of a film is wound around a side surface including ridge lines of the all-solid-state battery laminate. However, such a strip-shaped member made of a film is easily damaged at corners or ridge line portions of a three-dimensional shape of the all-solid-state battery laminate, which leads to degradation of durability of the electrical storage device. This applies not only to the all-solid-state battery laminate but also generally to a case in which an electrode assembly having a three-dimensional shape including corners and ridge line portions is wrapped by an outer package film. PTL 1 does not take this point into consideration.

An object of the present invention is to provide an electrical storage device with improved durability.

### Solution to Problem

An electrical storage device according to a first aspect of the present invention includes: an electrode assembly that has a three-dimensional shape including ridge line portions; an outer package film that covers at least one of the ridge line portions and wraps the electrode assembly; and a protective member that is disposed outside the electrode assembly along at least one of the ridge line portions.

An electrical storage device according to a second aspect of the present invention is the electrical storage device according to the first aspect, in which the protective member is disposed outside the outer package film.

An electrical storage device according to a third aspect of the present invention is the electrical storage device according to the first or second aspect, in which the protective member is disposed inside the outer package film.

An electrical storage device according to a fourth aspect of the present invention is the electrical storage device according to any one of the first to third aspects, in which the outer package film further wraps the electrode assembly to have an opening part, and the electrical storage device further includes a lid disposed at the opening part.

A protective member according to a sixth aspect of the present invention is a protective member for an electrical storage device, the electrical storage device including an electrode assembly that has a three-dimensional shape including ridge line portions, and an outer package film that covers at least one of the ridge line portions and wraps the electrode assembly. The protective member is disposed outside the electrode assembly along at least one of the ridge line portions.

### Advantageous Effects of Invention

According to the present invention, an electrical storage device with improved durability is provided.

### Brief Description of Drawings

[Fig. 1] Fig. 1 is a perspective view of an electrical storage device according to a first embodiment.
[Fig. 2] Fig. 2 is a perspective view of an electrode assembly in Fig. 1.
[Fig. 3] Fig. 3 is a sectional view illustrating a layer configuration of an outer package film included in the electrical storage device in Fig. 1.
[Fig. 4] Fig. 4 is a perspective view illustrating a schematic configuration of a lid.
[Fig. 5] Fig. 5 is a perspective view illustrating a schematic configuration of a protective member.
[Fig. 6] Fig. 6 is a perspective view of an electrical storage device according to a second embodiment.
[Fig. 7] Fig. 7 is a perspective view illustrating a partial configuration of a protective member according to the second embodiment.
[Fig. 8] Fig. 8 is a perspective view of an electrical storage device according to a third embodiment.
[Fig. 9] Fig. 9 is a perspective view of a protective member and an electrode assembly according to the third embodiment.
[Fig. 10] Fig. 10 is a perspective view of a protective member and an electrode assembly according to a fourth embodiment.
[Fig. 11] Fig. 11 is a diagram illustrating an example of a state where an electrical storage device is used.

### Description of Embodiments

Hereinafter, electrical storage devices according to some embodiments of the present invention will be described with reference to the drawings. Note that in the drawings, like or equivalent parts are denoted by like symbols, and the descriptions thereof are not repeated. Further, the drawings do not necessarily reflect the actual dimensions of each member. Note that in the present embodiments, a numerical range indicated by the term "A to B" means "A or more" and "B or less". For example, the expression of "2 to 15 mm" means 2 mm or more and 15 mm or less. In numerical ranges serially described in the present embodiment, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range.

### [1. First embodiment]

### <1-1. Configuration of electrical storage device>

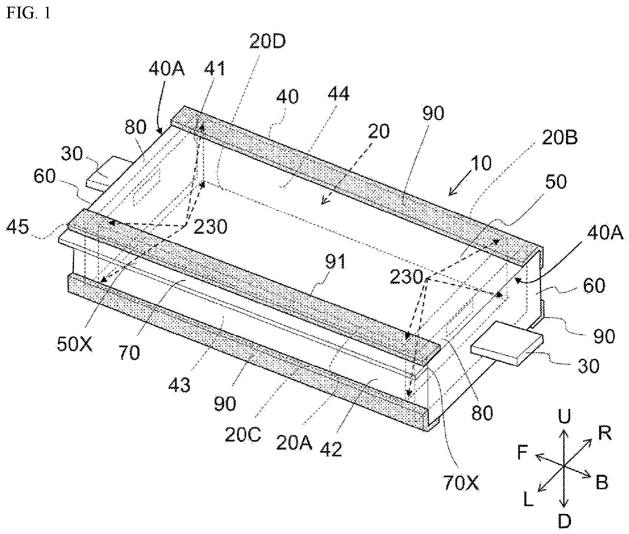

Fig. 1 is a perspective view schematically illustrating an electrical storage device 10 of a first embodiment. The electrical storage device 10 includes an electrode assembly 20, a pair of electrode terminals 30, an outer packaging 40, and protective members 90 and 91. In Fig. 1, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The directions indicated by the arrows UD, LR, and FB are also shared with the subsequent drawings.

### [Electrode assembly]

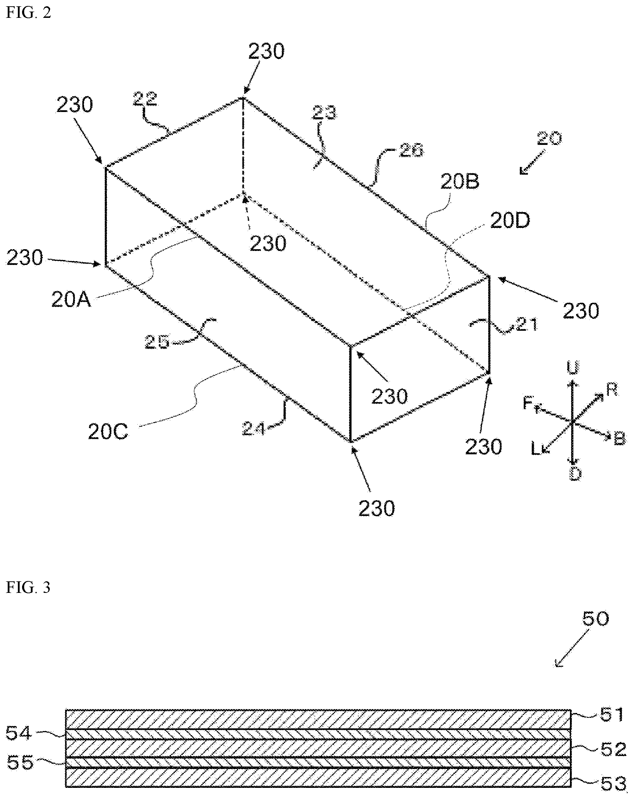

Fig. 2 is a side view schematically illustrating a configuration of the electrode assembly 20. Examples of the electrode assembly 20 include a lithium ion battery, a capacitor, or an all-solid-state battery, a semi-solid-state battery, a pseudo-solid-state battery, a polymer battery, an all-polymer battery, a lead storage battery, a nickel-metal hydride storage battery, a nickel-cadmium storage battery, a nickel-iron storage battery, a nickel-zinc storage battery, a silver oxide-zinc storage battery, a metal-air battery, a polyvalent cation battery, or electrodes (positive electrodes and negative electrodes) forming an electrical storage member such as a capacitor, a separator, and the like. In the present embodiment, the electrode assembly 20 has a substantially cuboid shape. Note that the "substantially cuboid" includes a perfect cuboid and also a solid that can be seen as a cuboid by modifying the shape of a part of the outer surface thereof, for example. However, the electrode assembly 20 may have, for example, a three-dimensional shape including a plurality of corners such as a substantially polygonal column, or may have a substantially cylindrical shape.

As illustrated in Fig. 2, the electrode assembly 20 has a front surface 21, a back surface 22, an upper surface 23, a lower surface 24, a first side surface 25, and a second side surface 26 in the present embodiment. The upper surface 23 and the lower surface 24 coincide with an upper surface and a lower surface of a laminated structure of the electrode assembly 20, respectively. Also, the front surface 21, the back surface 22, the first side surface 25, and the second side surface 26 are virtual surfaces when the electrode assembly 20 is regarded as having a substantially cuboid shape with reference to the upper surface 23 and the lower surface 24. The front surface 21 faces one of the lids 60. The back surface 22 faces the other lid 60. In the present embodiment, the upper surface 23 constitutes a first surface 41 of the outer packaging 40, which will be described later. In the present embodiment, the lower surface 24 constitutes a third surface 43 of the outer packaging 40, which will be described later. In the present embodiment, the first side surface 25 constitutes a second surface 42 of the outer packaging 40, which will be described later. The second side surface 26 constitutes a fourth surface 44 of the outer packaging 40, which will be described later. However, each of the surfaces 23 to 26 of the electrode assembly 20 may constitute any one of the first surface 41 to the fourth surface 44 of the outer packaging 40. The electrode assembly 20 includes a ridge line portion 20A, a ridge line portion 20B, a ridge line portion 20C, and a ridge line portion 20D. The ridge line portion 20A is formed at the boundary between the upper surface 23 and the first side surface 25. The ridge line portion 20B is formed at the boundary between the upper surface 23 and the second side surface 26. The ridge line portion 20C is formed at the boundary between the first side surface 25 and the lower surface 24. The ridge line portion 20D is formed at the boundary between the second side surface 26 and the lower surface 24. In other words, it is assumed that each ridge line portion is a boundary of two mutually intersecting surfaces. An end part of each of the ridge line portions 20A to 20D serves as a corner 230 corresponding to a vertex of the substantially cuboid shape. Note that the outermost layer of the electrode assembly 20 is not necessarily an electrode, and may be, for example, a protective tape or a separator.

### [Outer packaging]

The outer packaging 40 seals the electrode assembly 20. The outer packaging 40 includes the outer package film 50 and the pair of lids 60. The outer package film 50 wraps the electrode assembly 20 such that a pair of opening parts 40A are formed. In the present embodiment, the outer package film 50 is wound around the electrode assembly 20 such that the pair of opening parts 40A are formed. However, wrapping the electrode assembly 20 by the outer package film 50 is not limited to winding the outer package film 50, and the electrode assembly 20 may be disposed inside an outer package film 50 formed into a tubular shape in advance. Accordingly, the outer package film 50 covers the front surface 21, the back surface 22, the upper surface 23, the lower surface 24, the first side surface 25, the second side surface 26, the ridge line portions 20A to 20D, and the corners 230 of the electrode assembly 20, and the first surface 41 to the fourth surface 44, which will be described later, of the outer packaging 40 are formed. The outer package film 50 includes a bulging portion 50X bulging further outward than a part wrapping the electrode assembly 20 in the state where it wraps the electrode assembly 20. The pair of lids 60 are disposed on the lateral sides of the electrode assembly 20, respectively, to close the pair of opening parts 40A.

For example, there is a method in which a housing portion (recess) for housing the electrode assembly 20 is formed in the outer package film 50 through cold molding. However, it is not always easy to form a deep housing portion by such a method. If an attempt is made to form a deep (for example, 15 mm in terms of molding depth) accommodating portion (recess) by cold molding, pinholes or cracks are generated in the outer package film 50, which leads to increased likelihood of deterioration in battery performance. On the other hand, since the outer packaging 40 seals the electrode assembly 20 by winding the outer package film 50 around the electrode assembly 20 in the present embodiment, the electrode assembly 20 can be easily sealed regardless of the thickness of the electrode assembly 20. In order to reduce a dead space between the electrode assembly 20 and the outer package film 50 to thereby improve the volume energy density of the electrical storage device 10, and also in order to improve cooling efficiency, a state where the outer package film 50 is in contact with and is wound around the outer surface of the electrode assembly 20 is preferable. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

### [Outer package film]

Fig. 3 is a sectional view illustrating a layer configuration of the outer package film 50. As illustrated in Fig. 3, the outer package film 50 is, for example, a laminate (laminated film) including a base material layer 51, a barrier layer 52 and a heat-sealable resin layer 53 in the stated order. Note that the outer package film 50 is not required to include all these layers, and may be free of, for example, the barrier layer 52. In other words, the outer package film 50 is only required to be made from a material that is flexible and easy to bend, and the outer package film 50 may be made from, for example, a resin film. Note that the outer package film 50 is preferably heat-sealable.

The base material layer 51 included in the outer package film 50 is a layer for imparting heat resistance to the outer package film 50 to suppress generation of pinholes which may occur during processing or distribution. The base material layer 51 includes, for example, at least one of a stretched polyester resin layer and a stretched polyamide resin layer. For example, by the base material layer 51 including at least one of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Furthermore, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 20 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacturing method described in International Publication No. WO 2022/092231. The barrier layer 52 may be formed only of a recycled material, or may be formed of a mixed material of a recycled material and a virgin material. Note that the metal recycled material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 mass% to 9.0 mass%, more preferably 0.5 mass% to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil made of, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed of austenitic stainless steel.

Specific examples of the austenite-based stainless steel constituting the stainless steel foil include SUS304, SUS301, SUS316L, and of these, SUS304 is especially preferable.

In a case where the barrier layer 52 is a metal foil, the barrier layer 52 may perform a function as a barrier layer suppressing at least ingress of moisture, and has a thickness of, for example, about 5 µm to 200 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 µm to 85 µm, about 9.0 µm to 50 µm, about 9.0 µm to 40 µm, about 9.0 µm to 35 µm, about 20 µm to 85 µm, about 20 µm to 50 µm, about 20 µm to 40 µm, about 20 µm to 35 µm, about 25 µm to 85 µm, about 25 µm to 50 µm, about 25 µm to 40 µm, or about 25 µm to 35 µm. In a case where the barrier layer 52 is formed of an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 µm to 200 µm, about 35 µm to 85 µm, about 35 µm to 75 µm, about 35 µm to 70 µm, about 45 µm to 200 µm, about 45 µm to 85 µm, about 45 µm to 75 µm, about 45 µm to 70 µm, about 50 µm to 200 µm, about 50 µm to 85 µm, about 50 µm to 75 µm, about 50 µm to 70 µm, about 55 µm to 200 µm, about 55 µm to 85 µm, about 55 µm to 75 µm, or about 55 µm to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, in a case where the barrier layer 52 is made of a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

When the barrier layer 52 is a metal foil, it is preferable that a corrosion-resistant film be provided at least on a surface on a side opposite to the base material layer 51 for preventing dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (for example, an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. In a case where the buffer layer is made from a nonwoven fabric, the lower limit of the thickness of the buffer layer is preferably 100 µm, more preferably 200 µm, or still more preferably 1,000 µm. In a case where the buffer layer is made from a nonwoven fabric, the upper limit of the thickness of the buffer layer is preferably 5,000 µm, or more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm among these.

In a case where the buffer layer is made from rubber, the lower limit of the thickness of the buffer layer is preferably 0.5 mm. In a case where the buffer layer is made from rubber, the upper limit of the thickness of the buffer layer is preferably 10 mm, more preferably 5 mm, still more preferably 2 mm. In a case where the buffer layer is made from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

In the present embodiment, mutually facing surfaces of the outer package film 50 (heat-sealable resin layer 53) are heat-sealed in a state where the outer package film 50 is wound around the electrode assembly 20 and the lids 60 to thereby form a first seal portion 70 (see Fig. 1). In the present embodiment, the first seal portion 70 extends in a longitudinal direction (FB direction) of the outer packaging 40. In the outer packaging 40, the position at which the first seal portion 70 is formed can be arbitrarily selected. In the present embodiment, a root 70X of the first seal portion 70 is located on a side 45 of the boundary between the first surface 41 and the second surface 42 of the outer packaging 40. The first surface 41 has a larger area than the second surface 42. The root 70X of the first seal portion 70 may be located on an arbitrary surface of the outer packaging 40. In the present embodiment, for example, the first seal portion 70 is folded toward the second surface 42 of the outer packaging 40. The first seal portion 70 may bulge further outward than the electrode assembly 20 in plan view, or may be folded toward the first surface 41. In the outer packaging 40, the surface facing the first surface 41 is defined as a third surface 43, and the surface facing the second surface is defined as a fourth surface 44. As described above, the first surface 41 to the fourth surface 44 are surfaces corresponding to the upper surface 23, the first side surface 25, the lower surface 24, and the second side surface 26 of the electrode assembly, respectively.

### [Lid]

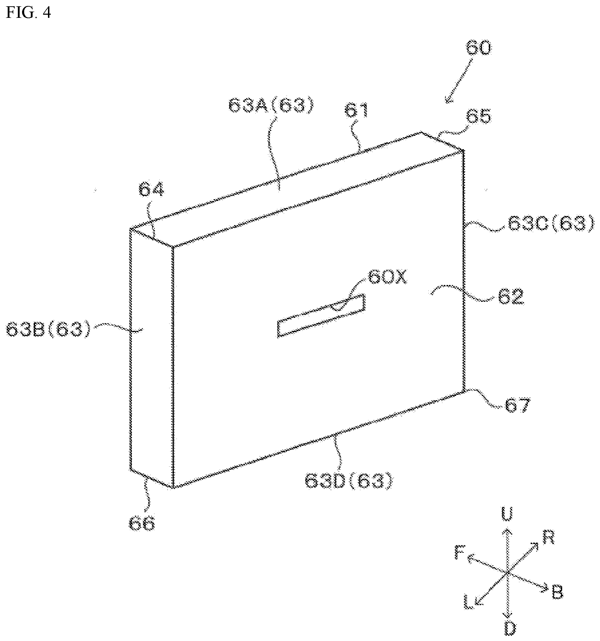

Fig. 4 is a perspective view illustrating a schematic configuration of the lid 60. The lid 60 is a member disposed to close each opening part 40A and has a plate shape with a polygonal shape when seen in the FB direction of the electrical storage device 10, for example. The lid 60 is made of, for example, a resin. The lid 60 may be formed by, for example, cold-molding the outer package film 50. Alternatively, the lid 60 may be a metal molded article. Furthermore, the material constituting the lid 60 may include at least one or more kinds of materials from among metal, metal oxide, carbon fiber reinforced plastic, and rubber.

The lid 60 includes a first surface 61, a second surface 62, and a lid sealing portion 63. The first surface 61 faces the electrode assembly 20. The second surface 62 is a surface on a side opposite to the first surface 61. The lid sealing portion 63 is connected to the first surface 61 and the second surface 62 and is heat-sealed to the heat-sealable resin layer 53 of the outer package film 50 to thereby form a second seal portion 80.

The lid sealing portion 63 includes a first sealing surface 63A, a second sealing surface 63B, a third sealing surface 63C, and a fourth sealing surface 63D. The first sealing surface 63A forms the upper surface of the lid 60. The first sealing surface 63A extends in a first direction (LR direction in the present embodiment) in front view of the lid 60. Note that in the present embodiment, the second surface 62 which is a surface facing outward in the electrical storage device 10 is defined as a front surface of the lid 60. The second sealing surface 63B and the third sealing surface 63C are connected to the first sealing surface 63A and form side surfaces of the lid 60. The second sealing surface 63B and the third sealing surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth sealing surface 63D forms the lower surface of the lid 60. The fourth sealing surface 63D extends in a first direction (LR direction in the present embodiment) in front view of the lid 60.

In a case where the lid 60 has a plate shape, the lid 60 is preferably thick to some extent to suppress deformation of the outer packaging 40 even in a case where electrical storage devices 10 are stacked on top of another. From another viewpoint, in the case where the lid 60 has a plate shape, the lid sealing portion 63 of the lid 60 is thick to some extent such that the lid sealing portion 63 of the lid and the outer package film 50 can be suitably heat-sealed when the second seal portion 80 is formed. The minimum value of the thickness of the lid 60 is, for example, 1.0 mm, more preferably 3.0 mm, still more preferably 4.0 mm. The maximum value of the thickness of the lid 60 is, for example, 20 mm, more preferably 15 mm, still more preferably 12 mm. The thickness of the material constituting the lid 60 is preferably in the range of 1.0 mm to 20 mm, 1.0 mm to 15 mm, 1.0 mm to 12 mm, 3.0 mm to 20 mm, 3.0 mm to 15 mm, 3.0 mm to 12 mm, 4.0 mm to 20 mm, 4.0 mm to 15 mm, or 4.0 mm to 12 mm. In the present embodiment, in the case where the lid 60 is described as having a plate shape, an aspect in which the lid 60 is made only of the film specified by Japanese Industrial Standard (JIS), [Packaging Terminology] Standard is not included. Note that the thickness of the lid 60 may vary depending on a portion of the lid 60. In a case where the thickness of the lid 60 varies depending on a portion, the thickness of the thickest portion of the lid 60 is defined as a thickness of the lid 60.

The lid sealing portion 63 further includes boundaries 64, 65, 66 and 67. The boundary 64 is a boundary between the first sealing surface 63A and the second sealing surface 63B. The boundary 65 is a boundary between the first sealing surface 63A and the third sealing surface 63C. The boundary 66 is a boundary between the fourth sealing surface 63D and the second sealing surface 63B. The boundary 67 is a boundary between the fourth sealing surface 63D and the third sealing surface 63C. The shapes of the boundaries 64 to 67 may be angular, or may be rounded off by round chamfering. In the present embodiment, the boundaries 64 to 67 are angular.

From the viewpoint of suitably heat-sealing the lid 60 and the outer package film 50, the main components of materials constituting the lid 60 and materials constituting the heat-sealable resin layer 53 of the outer package film 50 are preferably the same. In the present embodiment, polypropylene is a main component of materials constituting the lid 60 and materials constituting the heat-sealable resin layer 53. Note that the main component means a material that occupies 50% by mass or more, preferably 80% by mass or more, more preferably 90% by mass or more, and yet more preferably 95% or more when content of all the materials contained in the component is regarded as 100% by mass, for example.

In the present embodiment, a through-hole 60X into which the electrode terminal 30 as will be described later is inserted is formed in the lid 60. The through-hole 60X penetrates through the first surface 61 and the second surface 62. In a state where the electrode assembly 20 is housed, the electrode terminal 30 protrudes to the outside of the outer packaging 40 by passing through the through-hole 60X formed in the lid 60. A small gap between the through-hole 60X of the lid 60 and the electrode terminal 30 is filled with, for example, a resin. Note that in the electrical storage device 10, the position at which the electrode terminal 30 protrudes to the outside can be arbitrarily selected. For example, the electrode terminal 30 may protrude to the outside from a hole formed in any one of the six surfaces that the outer packaging 40 has. In this case, a small gap between the outer packaging 40 and the electrode terminal 30 is filled with, for example, a resin. Although the lid 60 and the electrode terminal 30 are provided separately in the electrical storage device 10, the lid 60 and the electrode terminal 30 may be integrally formed. Note that in a case where the electrode terminal 30 does not protrude from the end edge of the outer packaging 40, the through-hole 60X is not required to be formed in the lid 60.

### [Electrode terminal]

Referring again to Fig. 1, the electrical storage device 10 according to the present embodiment includes the pair of electrode terminals 30. The electrode terminals 30 are metal terminals for use in input and output of electrical power in the electrode assembly 20. One end part of each electrode terminal 30 is electrically connected to an electrode assembly (a positive electrode or a negative electrode). The other end part of each electrode terminal 30 protrudes outward from an end edge of the outer packaging 40, for example. Note that the electrode terminal 30 is only required to enable input and output of electrical power in the electrode assembly 20, and is not required to protrude from the outer packaging 40, for example. In a case where lids 60 described later are made from, for example, metal, the lids 60 may also function as the electrode terminal 30, and in this case, the lids 60 having a function as an electrode terminal may, but are not required to, protrude from the outer packaging 40.

The metal material for forming the electrode terminal 30 is, for example, aluminum, nickel, copper or the like. In a case where the electrode assembly 20 is a lithium ion battery, for example, the electrode terminal 30 connected to a current collector tab which is a positive electrode is typically made from aluminum or the like, and the electrode terminal 30 connected to a current collector tab 210 which is a negative electrode is typically made from copper, nickel, or the like.

### [Protective member]

Referring again to Fig. 1, the electrical storage device 10 further includes protective members 90 and a protective member 91. The protective members 90 and the protective member 91 are disposed outside the corners 230 and the ridge line portions 20A to 20D of the electrode assembly 20 to cover the corners 230 and the ridge line portions 20A to 20D, respectively. In the first embodiment, the protective members 90 and the protective member 91 are disposed outside the outer packaging 40 and are joined to the outermost layer of the outer package film 50 or the lid 60.

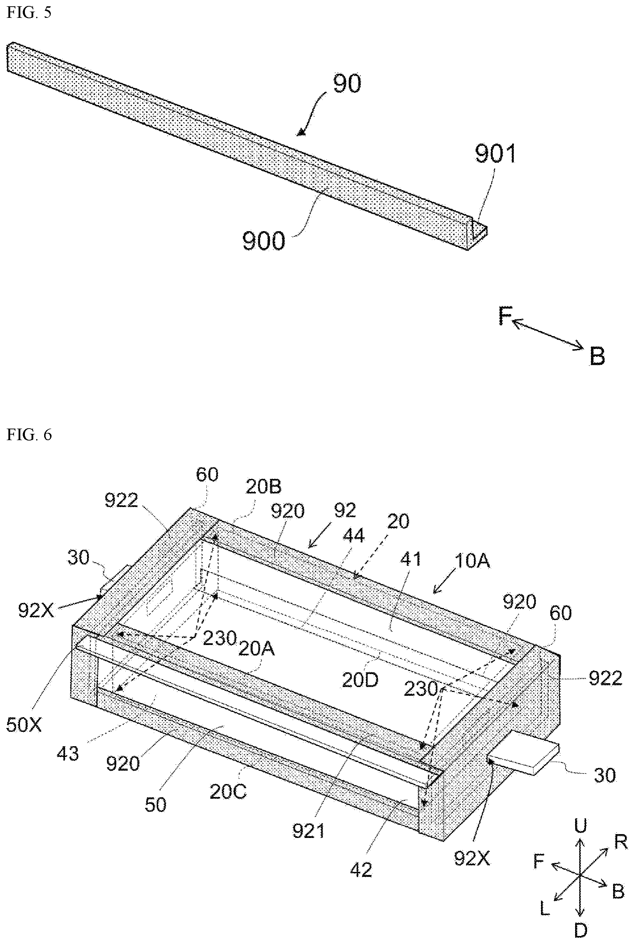

Fig. 5 is a perspective view illustrating a configuration of each protective member 90. The protective member 90 is a member disposed outside the ridge line portions 20B to 20D including the corners 230 of the electrode assembly 20. The protective member 90 extends in the FB direction and has an L shape when seen in the FB direction. The protective member 90 has a first surface portion 900 and a second surface portion 901 intersecting the first surface portion 900. Accordingly, one of the three protective members 90 is disposed to extend over the second surface 42 and the third surface 43 of the outer packaging 40, another protective member 90 is disposed to extend over the third surface 43 and the fourth surface 44, and the other protective member 90 is disposed so as to extend over the first surface 41 and the fourth surface 44 in the present embodiment. With such a configuration, the protective members 90 reinforce portions of the outer packaging 40 which correspond to the ridge line portions 20B to 20C of the electrode assembly 20. Note that the protective members 90 may be simple plate-shaped members having no L shape before being disposed on the outer packaging 40 and may have a shape as illustrated in Fig. 5 after being joined to the outer packaging 40.

The protective member 91 is a member disposed outside the ridge line portion 20A of the electrode assembly 20 in the present embodiment. The protective member 91 extends in the FB direction and has a flat plate shape when seen in the UD direction. Similarly to the protective members 90, the protective member 91 is also joined to the outermost layer of the outer package film 50. The protective member 91 is preferably disposed outside the ridge line portion 20A and on the root 70X of the first seal portion 70. Since the bulging portion 50X can move with respect to the other part of the outer packaging 40, fatigue is likely to occur at the part of the bulging portion 50X including the root 70X of the first seal portion 70, in particular. At the portion of the outer package film 50 where material fatigue has occurred, the barrier layer 52, the base material layer 51, and the heat-sealable resin layer 53 may be delaminated, a cracking may occur, and the outer package film 50 may break. In a typical example, the electrical storage device 10 may be moved to an arbitrary place in a state where the bulging portion 50X (first seal portion 70) is gripped. In such a case, the bulging portion 50X can move with respect to the other part of the outer packaging 40, and there is thus a concern that the part of the outer package film 50 including the root of the bulging portion 50X, in other words, the part including the root 70X of the first seal portion 70 may break and sealing performance of the electrical storage device 10 may be degraded. The movement of the bulging portion 50X is suppressed, and the periphery of the root 70X can be reinforced, by the protective member 91 being disposed on the root 70X of the first seal portion 70. Note that although the protective member 91 is disposed on the forty first surface of the outer packaging 40 in the example in Fig. 1, the protective member 91 may be disposed on the second surface 42 surface of the outer packaging 40 in addition to or instead of the one on the first surface 41. Alternatively, the first surface portion 900 and the second surface portion 901 of the protective member 90 may be disposed outside the ridge line portion 20A to follow the second surface surface 42 of the outer packaging 40 and the lower surface of the bulging portion 50X, respectively. In addition, the protective member 90 may be disposed outside the ridge line portion 20A to extend over the root 70X of the bulging portion 50X (first seal portion 70) folded from the second surface 42 in a state where the bulging portion 50X is folded toward the first surface 41. Furthermore, the protective member 90 may be disposed outside the ridge line portion 20A to extend over the root 70X of the bulging portion 50X (first seal portion 70) folded from the first surface 41 in a state where the bulging portion 50X is folded toward the second surface 42.

The materials forming the protective members 90 and the protective member 91 may contain at least one or more kinds of materials from among a resin, metal, metal oxide, a carbon material (such as carbon fiber reinforced plastic), and a rubber material. Among these, a material having a cushioning property is preferable, and examples of such a material include the materials constituting the buffer layer of the outer package film 50. Also, the materials forming the protective members 90 and the protective member 91 are preferably elastically deformable materials. In the electrical storage device 10, the internal pressure of the electrical storage device 10 may rise due to a change in volumes of the positive active material and the negative active material of the electrode assembly 20 with charging and discharging, generation of gas, and the like. If the internal pressure of the electrical storage device 10 rises, the outer packaging 40 may expand, and the outer package film 50 may extend. Also, in a case where vacuuming is carried out in a process of manufacturing the electrical storage device 10, the outer packaging 40 may contract. In a case where the protective members 90 and the protective member 91 are formed of elastically deformable materials, the protective members 90 and the protective member 91 can be deformed corresponding to such expansion and contraction of the outer packaging 40 and become unlikely to be separated from the outer package film 50, and effects, which will be described later, can thus be further enhanced. Furthermore, in a case where the electrode assembly 20 has an electrolytic solution, the surfaces of the protective members 90 and the protective member 91 are preferably constituted by a material with resistance against the electrolytic solution.

On the other hand, in a case where the protective members 90 and the protective member 91 are formed of materials having relatively low stretchability and deformability, the protective members 90 and the protective member 91 have an accompanying effect of suppressing the expansion and contraction deformation of the outer packaging 40 described above. Specifically, the expansion of the outer packaging 40 can be limited by the protective members 90 and the protective member 91 having relatively low stretchability and deformability being present outside the outer package film 50. Also, if the protective members 90 and the protective member 91 are partially joined to the outer package film 50, stretchability of the outer package film 50 at the part is degraded, and it is thus possible to limit the above contraction of the outer packaging 40.

A method for joining the protective members 90 and the protective member 91 to the outer package film 50 is not particularly limited. Examples thereof include a method in which an adhesive is interposed among the protective members 90, the protective member 91, and the outer packaging 40, a method in which the protective members 90, the protective member 91, and the outer packaging 40 are fusion-bonded with a heat-sealable resin, a method in which a tape having adhesive layers on both surfaces is interposed among the protective members 90, the protective member 91, and the outer packaging 40, and a method in which at least either the protective members 90 or the protective member 91 is formed into a tape shape having an adhesive layer on one surface thereof and is attached along a ridge line of the electrical storage device.

### <1-2. Action and effect of electrical storage device>

The ridge line portions 20A to 20D and the corners 230 of the electrode assembly 20 have a sharper shape than the other parts of the electrode assembly 20, and when an impact is applied to the electrical storage device 10, the outer package film 50 is likely to break by the ridge line portion 20A to 20D and the corners 230 coming into contact with the outer package film 50. According to the electrical storage device 10, the parts of the outer packaging 40 corresponding to the ridge line portions 20A to 20D and the corners 230 of the electrode assembly 20 are covered with the protective members 90 and 91. In this manner, the outer package film 50 is reinforced at the parts corresponding to the ridge line portions 20A to 20D and the corners 230 of the electrode assembly 20, and it is possible to suppress breakage of the outer package film 50 due to the ridge line portions 20A to 20D and the corners 230 of the electrode assembly 20 even if an impact is applied to the electrical storage device 10. As a result, durability of the electrical storage device 10 is improved.

### [2. Second embodiment]

An electrical storage device 10A of a second embodiment is different from that in the first embodiment in that the electrical storage device 10A includes a protective member 92 instead of the protective members 90 and the protective member 91, and the other configurations are similar to those in the first embodiment. Hereinafter, differences of the electrical storage device 10A of the second embodiment from those in the first embodiment will be mainly described.

### <2-1. Configuration of electrical storage device>

Fig. 6 is a perspective view illustrating a configuration of the electrical storage device 10A of the second embodiment. As illustrated in Fig. 6, the electrical storage device 10A includes the protective member 92. The protective member 92 includes three first parts 920, a second part 921, and two third parts 922. The first parts 920 are disposed outside ridge line portions 20B to 20D, respectively, similarly to the protective members 90. The second part 921 is disposed outside a ridge line portion 20A similarly to the protective member 91. The third parts 922 are disposed outside a pair of lids 60, respectively. The first parts 920, the second part 921, and the third parts 922 are coupled to each other. A through-hole 92X for exposing tips of electrode terminals 30 may be formed in the third parts 922. In addition, the third parts 922 may be configured to cover only peripheral edge portions of the lids 60.

Each of the first parts 920 extends in the FB direction and has an L shape when seen in the FB direction. Both end parts of each first part 920 in the FB direction are coupled to the third parts 922.

The second part 921 extends in the FB direction and has a flat plate shape when seen in the UD direction. Both end parts of the second part 921 in the FB direction are coupled to the third parts 922. The second part 921 is preferably disposed outside the ridge line portion 20A and on a root 70X of a first seal portion 70. The reason for this is as described above in the first embodiment.

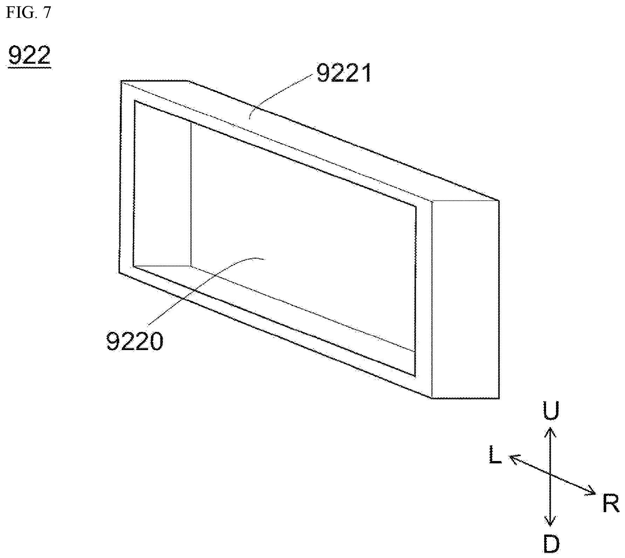

Fig. 7 is a perspective view illustrating a configuration of each third part 922. The third part 922 includes a plate-shaped wall surface portion 9220 facing a second surface 62 of the lid 60 and a side wall portion 9221 standing up from a peripheral edge of the wall surface portion 9220 and covers at least a part of a lid sealing portion 63 from the outside of an outer package film 50. In other words, the third part 922 is formed into a substantially box shape in the present embodiment. Note that in Fig. 7, illustration of other elements that can be formed in the third part 922, such as a through-hole and a slit, is omitted for convenience of explanation.

The third part 922 may have a function of reinforcing sealing of a second seal portion 80 by covering the lid sealing portion 63 of the lid 60, a part of the outer package film 50 facing the lid sealing portion 63, and at least a part of the second surface 62 of the lid 60 together. In this case, the third part 922 is preferably formed to include a material that does not allow gas and moisture to be transmitted therethrough, or is preferably formed to include a layer that does not allow gas and moisture to be transmitted therethrough. If the length of the outer package film 50 is long relative to the length of the lid sealing portion 63, the outer package film 50 may be loosened and the second seal portion 80 may not be partially formed when the lid sealing portion 63 and a heat-sealable resin layer 53 of the outer package film 50 are heat-sealed. If a sealing failure occurs, there is a concern that at least one of a gas and moisture may enter the inside of the outer packaging 40, or an electrolytic solution may leak to the outside of the outer packaging 40 in a case where the electrical storage device 10 includes the electrolytic solution. In the case where the third part 922 covers both the lid sealing portion 63 and the outer package film 50 and reinforces sealing by the second seal portion 80, it is possible to suppress infiltration of at least one of gas and moisture into the outer packaging 40 and leakage of the electrolytic solution to the outside of the outer packaging 40 even if a sealing failure of the second seal portion 80 occurs. In other words, it is possible to more reliably seal the outer package film 50 and the lid 60.

Furthermore, in the case where the third part 922 is formed into the container shape, the third part 922 may be joined to the outer packaging 40 by interposing a curable resin between the third part 922 and the lid 60 (particularly, the lid sealing portion 63). The curable resin is a resin including at least one of a photocurable resin, a room temperature curable resin, a thermosetting resin, and an electron beam curable resin. Among these, it is preferable to include at least one of a photocurable resin and a room temperature curable resin. The photocurable resin is a resin that is cured in response to irradiation with light with a specific wavelength. Examples of the photocurable resin include a radical polymerization-type resin that causes radicalization of a photopolymerization initiator and is cured through a radical chain reaction between functional groups of monomer and oligomer and a cationic polymerization-type resin that starts a cationic polymerization reaction in response to irradiation with ultraviolet rays and is cured. Examples of the radical polymerization-type resin include an acrylic resin, and examples of the cationic polymerization-type resin include an epoxy resin and vinyl ether. Examples of the room temperature curable resin include a resin containing an epoxy resin, an ester resin, or an acrylic resin as a main material and cured by being mixed with a curing agent. Examples of the thermosetting resin include a phenol resin, an epoxy resin, a melamine resin, a urea resin, an unsaturated polyester resin, an alkyd resin, a silicone resin, polyurethane, and a thermosetting polyimide. Examples of the electron beam curable resin include an acrylic resin. It is possible to more reliably prevent gas and moisture from entering inside from a sealing failure portion and to prevent an electrolytic solution from leaking to the outside of the electrical storage device 10A even if a sealing failure occurs in the second seal portion 80, by filling the space between the lid 60 and the third part 922 with these curable resins.

A method of coupling the first parts 920 and the second part 921 to the third parts 922 is not particularly limited. For example, it is possible to couple the first parts 920 to the third parts 922 by forming engaging portions in either the first parts 920 or the third parts 922, forming engaged portions in the others, and engaging the engaging portions and the engaged portions with each other. Similarly, it is possible to couple the second part 921 and the third parts 922 by forming engaging portions in either the second part 921 or the third parts 922, forming engaged portions in the others, and engaging the engaging portions and the engaged portions with each other, for example. The engaging portions are, for example, projecting portions, and the engaged portions are, for example, recessed portions to which the projecting portions can be fitted and fixed. Additionally or alternatively, the first parts 920 and the third parts 922, and the second part 921 and the third parts 922 may be joined to each other with an adhesive, may be joined to each other with tapes having adhesive layers, or may be fused with a heat-sealable resin. The first parts 920 to the third parts 922 may be coupled and then attached to the outer packaging 40 with the electrode assembly 20 sealed therein, or may be coupled at the same time as the attachment to the outer packaging 40 with the electrode assembly 20 sealed therein. The first parts 920, the second part 921, and the third parts 922 may be integrally formed. In this case, the protective member 92 is preferably formed of a deformable material to enable the attachment to the outer packaging 40.

The first part 920 to the third part 922 can be formed of a material similar to the material forming the protective members 90 and the protective member 91, respectively. The material forming each part may be different or the same for each part. A method for joining the first parts 920 and the second part 921 to the outer package film 50 is not particularly limited. Examples thereof include a method in which an adhesive is interposed between the first parts 920 and the second part 921, and the outer packaging 40, a method in which the first parts 920, the second part 921, and the outer packaging 40 are fusion-bonded with a heat-sealable resin, a method in which a tape having adhesive layers on both surfaces is interposed between the first parts 920 and the second part 921, and the outer packaging 40, and a method in which at least either first parts 920 or the second part 921 is formed into a tape shape having an adhesive layer on one surface thereof and is attached along a ridge line of the electrical storage device, similarly to the protective members 90 and the protective member 91. The third parts 922 can also be joined to the lid 60 and the outer package film 50 similarly to the first parts 920 and the second part 921 in addition to or instead of the method described above.

### <2-2. Action and effect of electrical storage device>

The electrical storage device 10A of the second embodiment can achieve an effect similar to that of the electrical storage device 10 according to the first embodiment. In other words, in the case where the first parts 920 to the third parts 922 are formed of elastically deformable materials, the first parts 920 to the third parts 922 can be deformed in a manner corresponding to expansion and contraction of the outer packaging 40 due to a change in internal pressure of the electrical storage device 10A and become unlikely to be separated from the outer package film 50. In this manner, the outer package film 50 is reinforced at the parts corresponding to the ridge line portions 20A to 20D and the corners 230 of the electrode assembly 20, and it is possible to suppress breakage of the outer package film 50 due to the ridge line portions 20A to 20D and the corners 230 of the electrode assembly 20 even if an impact is applied to the electrical storage device 10A. Furthermore, in a case where the third parts 922 are formed to reinforce sealing by the second seal portion 80, and even if a partially unsealed portion is generated in the second seal portion 80, the part is covered with the third parts 922. It is thus possible to more reliably seal the outer package film 50 and the lid 60.

In a case where the first parts 920 to the third parts 922 are formed of materials having relatively low stretchability and deformability, the protective member 92 has an accompanying effect of suppressing extension and deformation of the outer packaging 40 described above. In the electrical storage device 10A, the internal pressure of the electrical storage device 10A may rise due to a change in volumes of the positive active material and the negative active material of the electrode assembly 20 with charging and discharging, generation of gas, and the like. In a case where the internal pressure of the electrical storage device 10A rises, the outer packaging 40 may expand. It is possible to limit the expansion of the outer packaging 40 by the protective member 92 with relatively low stretchability and deformability being present outside the outer package film 50. Also, in a case where vacuuming is carried out in a process of manufacturing the electrical storage device 10A, the outer packaging 40 may contract. In a case where the protective member 92 is at least partially joined to the outer package film 50, the stretchability of the outer package film 50 at the part is lowered, and stretching and deformation of such an outer packaging 40 are thus suppressed.

### [3. Third embodiment]

An electrical storage device 10B of a third embodiment is different from that of the first embodiment in that the electrical storage device 10B includes a protective member 93 instead of the protective members 90 and the protective member 91 and the protective member 93 is disposed inside an outer packaging 40, and the other configurations are similar to those in the first embodiment. Hereinafter, differences of the electrical storage device 10B of the third embodiment from that in the first embodiment will be mainly described.

### <3-1. Configuration of electrical storage device>

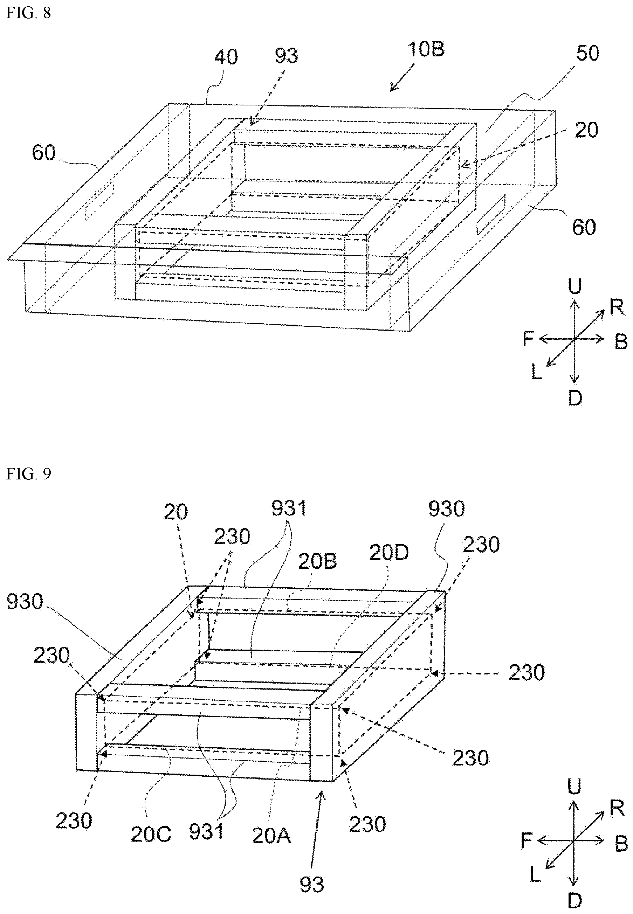

Fig. 8 is a perspective view illustrating a configuration of the electrical storage device 10B of the third embodiment (however, illustration of electrode terminals 30 is omitted). In the electrical storage device 10B, the protective member 93 is disposed between electrode assembly 20 and an outer packaging 40. In other words, the protective member 93 is sealed inside the outer packaging 40 along with the electrode assembly 20.

Fig. 9 is a perspective view illustrating configurations of the electrode assembly 20 and the protective member 93 of the electrical storage device 10B. The protective member 93 includes two side wall portions 930 facing a front surface 21 and a back surface 22 of the electrode assembly 20 and four frame portions 931 between the two side wall portions 930 to couple the two side wall portions 930. The side wall portions 930 are plate-shaped members disposed at a gap in the FB direction. Each of the frame portions 931 is a columnar member extending in the FB direction and connected to the two side wall portions 930. The electrode assembly 20 can be disposed in a space defined by the side wall portions 930 and the frame portions 931.

When the electrode assembly 20 is disposed inside the protective member 93, the four frame portions 931 are disposed outside ridge line portions 20A to 20D of the electrode assembly 20, respectively, and prevent the corners 230 and the ridge line portions 20A to 20D from coming into contact with the outer package film 50. In other words, the frame portions 931 function as buffering materials among the corners 230, the ridge line portions 20A to 20D, and the outer package film 50. As long as the corners 230 and the ridge line portions 20A to 20D can be prevented from coming into contact with the outer package film 50, the shape of the frame portions 931 when seen in the FB direction is not particularly limited and may be, for example, an L shape, a rectangle, a circle, a semicircle, a polygon, or the like. The frame portions 931 can come into contact with the outer package film 50 at the outermost position of the protective member 93. Therefore, at least the parts of the frame portions 931 that may come into contact with the outer package film 50 are preferably rounded to prevent the outer package film 50 from breaking.

The side wall portions 930 are disposed such that one of them faces the front surface 21 of the electrode assembly 20 and the other faces the back surface 22 of the electrode assembly 20. When the electrode assembly 20 is disposed inside the protective member 93, the two side wall portions 930 are disposed outside the ridge line portions 20A to 20D of the electrode assembly 20, respectively, to prevent the corners 230 and the ridge line portions 20A to 20D from coming into contact with the outer package film 50. In other words, the side wall portions 930 function as buffering materials among the corners 230, the ridge line portions 20A to 20D, and the outer package film 50. Therefore, at least the parts of the side wall portions 930 that may come into contact with the outer package film 50 are preferably rounded to prevent the outer package film 50 from breaking. Although the side wall portions 930 have a substantially rectangular shape when seen in the FB direction, for example, parts corresponding to vertexes of the rectangle are preferably rounded.

The side wall portions 930 may be provided with through-holes (not illustrated) through which the current collector tabs of the electrode assembly 20 are caused to penetrate. In this case, it is possible to cause the current collector tabs to project from the through-holes of the side wall portions 930 to the outside of the protective member 93 and to further establish electrical connection to the electrode terminals 30. Alternatively, the current collector tabs may be provided on the electrode assembly 20 so as to project in other directions and may be caused to project from between the frame portions 931 to the outside of the protective member 93.

Examples of the materials forming the side wall portions 930 and the frame portions 931 include materials similar to the materials listed in the first embodiment. Among these, a material having a cushioning property is preferable, and examples of such a material include the materials constituting the buffer layer of the outer package film 50. Also, the materials forming the side wall portions 930 and the frame portions 931 are preferably elastically deformable materials. In a case where the side wall portions 930 and the frame portions 931 are formed of elastically deformable materials, the protective member 93 can be deformed in a manner corresponding to changes in volume of the positive active material and the negative active material of the electrode assembly 20 with charging and discharging, and it is possible to further enhance the effect, which will be described later. Furthermore, in a case where the electrode assembly 20 includes an electrolytic solution, the surfaces of the side wall portions 930 and the frame portions 931 are preferably constituted by materials with resistance against the electrolytic solution. Note that the materials forming the side wall portions 930 and the frame portions 931 may be different from each other or may be the same.

On the other hand, in a case where the side wall portions 930 and the frame portions 931 are formed of materials having relatively low stretchability and deformability and these are at least partially joined to the innermost layer of the outer package film 50, the protective member 93 has an accompanying effect of suppressing the expansion and contraction deformation of the outer packaging 40. In the electrical storage device 10B, the internal pressure of the electrical storage device 10B may rise due to a change in volumes of the positive active material and the negative active material of the electrode assembly 20 with charging and discharging, generation of gas, and the like. In a case where the internal pressure of the electrical storage device 10B rises, the outer packaging 40 may expand. Also, in a case where vacuuming is carried out in a process of manufacturing the electrical storage device 10B, the outer packaging 40 may contract. Also, the protective member 93 is at least partially joined to the outer package film 50, stretchability of the outer package film 50 at the part is thus degraded, and therefore, it is possible to limit the expansion and contraction deformation of the outer packaging 40.

### <3-2. Action and effect of electrical storage device>

According to the electrical storage device 10B of the third embodiment, the protective member 93 functions as a buffering material that prevents the ridge line portions 20A to 20D and the corners 230 of the electrode assembly 20 from coming into contact with the outer package film 50. This suppresses particularly sharp parts of the electrode assembly 20 applying an impact to the outer package film 50 and breaking the outer package film 50. Furthermore, in a case where the protective member 93 itself is formed of an elastic material, or in a case where the parts that come into contact with the outer package film 50 are rounded, the breakage of the outer package film 50 can be more reliably prevented. The protective member 93 protects the electrode assembly 20 against an impact applied from the outside of the electrical storage device 10B. As a result, durability of the electrical storage device 10B is improved.

### [4. Fourth embodiment]

An electrical storage device 10C of a fourth embodiment is different from that of the third embodiment in that the electrical storage device 10C includes a protective member 94 instead of the protective member 93 and the protective member 94 is configured to include lids 60, and the other configurations are similar to those in the third embodiment. Hereinafter, differences of the electrical storage device 10C of the fourth embodiment from that of the third embodiment will be mainly described.

### <4-1. Configuration of electrical storage device>

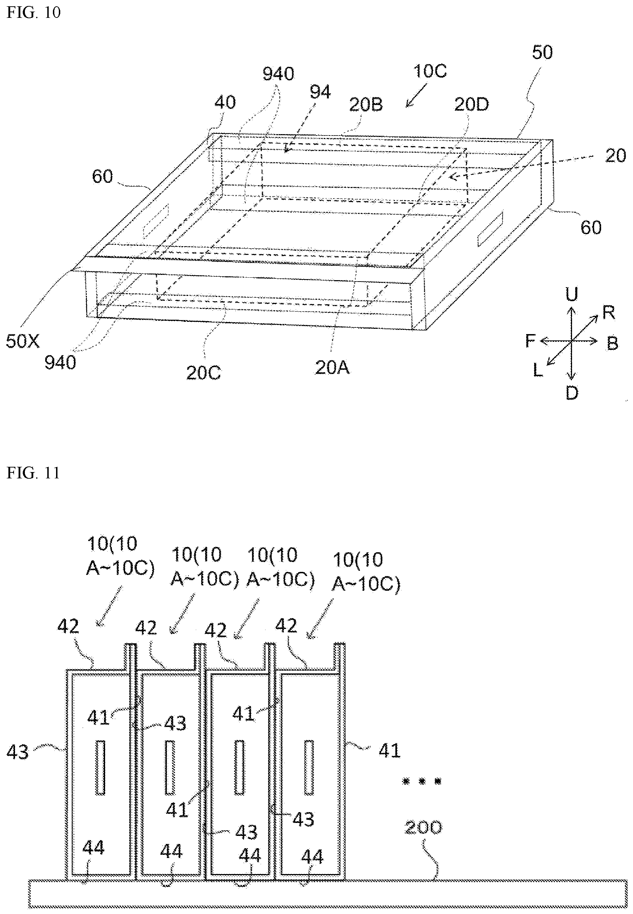

Fig. 10 is a perspective view illustrating a configuration of the electrical storage device 10C of the fourth embodiment (however, illustration of electrode terminals 30 is omitted). The protective member 94 includes a pair of lids 60 and four frame portions 940 between the pair of lids 60 to couple these lids 60. The configuration of the lids 60 is common to that of the lids 60 according to the first to third embodiments. Each of the frame portions 940 is a columnar member extending in the FB direction and connected to the pair of lids 60, and has a configuration common to that of the frame portions 931 of the third embodiment. An electrode assembly 20 can be disposed in the space defined by the lids 60 and the frame portions 940.

### <4-2. Action and effect of electrical storage device>

The electrical storage device 10C of the fourth embodiment can achieve an effect similar to that of the electrical storage device 10B according to the third embodiment. According to the electrical storage device 10C of the fourth embodiment, the pair of lids 60 also function as a part of the protective member 94. It is thus possible to constitute the protective member 94 without excessively increasing the number of components.

### [5. Modifications]

The above-described embodiments are an example of possible forms of an electrical storage device according to the present invention, and are not intended to limit the form thereof. The electrical storage device according to the present invention may have a form different from that exemplified in each of the embodiments. An example thereof is a form in which a part of the configuration of any of the embodiments is replaced, changed or omitted, or a form in which a new configuration is added to any of the embodiments. Some examples of modifications of the embodiments will be described below. Note that the above embodiments and the following modifications can be combined as long as they are not technically contradictory.

(1) In the electrical storage device 10A according to the second embodiment, the third parts 922 may not be formed into the substantially container shape. For example, through-holes through which the electrode terminals 30 are made to pass may be formed in the wall surface portions 9220. In addition, the wall surface portions 9220 may be configured to have frame shapes to cover only the peripheral edge portions of the second surfaces 62 of the lids 60. The third parts 922 may have slits or the like that cause the bulging portion 50X to pass therethrough in the side wall portions 9221 such that the third parts do not interfere with the bulging portion 50X. Furthermore, the side wall portions 9221 may be omitted, and the third parts 922 may include only the wall surface portions 9220.
(2) In the electrical storage device 10 of the first embodiment, the configuration of the protective member 91 may be appropriately changed or omitted in accordance with the position of the root 70X of the first seal portion 70 in a case where the root 70X is formed at another position, such as on a surface of the outer packaging 40. Similarly, in the electrical storage device 10A of the second embodiment, the configuration of the second part 921 may be appropriately changed or omitted in accordance with the position of the root 70X of the first seal portion 70 in a case where the root 70X is formed at another position, such as on a surface of the outer packaging 40.
(3) In the electrical storage devices 10 and 10A to 10C of the first to fourth embodiments, the outer package films 50 may bulge further outward than the lids 60 in the FB direction. The parts of the outer package films 50 bulging as compared with the lids 60 may be folded like a gable top pouch or a brick-shaped pouch. The parts of the outer package films 50 bulging as compared with the lids 60 may be bent to follow the second surfaces 62 of the lids 60.
(4) In the electrical storage devices 10, 10A to 10C of the first to fourth embodiments, the outer shape of the outer packaging 40 can be arbitrarily changed. For example, the lid 60 may not have a rectangular shape when seen in the FB direction, and may have another polygonal shape, a substantially circular shape, or a substantially elliptical shape. The shape of the lid 60 may be changed in accordance with, for example, the three-dimensional shape of the electrode assembly 20. The shapes of the protective members 90 to 94 may also be changed in accordance with the three-dimensional shape of the electrode assembly 20, for example, as needed. For example, the shapes of the protective members 90 and the first part 920 when seen in the FB direction may not be an L shape and may be a rectangular shape, a circular shape, a semicircular shape, or a polygonal shape, for example. Note that when the electrode assembly 20 has a substantially cylindrical shape, for example, a boundary between an end surface of the cylinder in the axial direction and a side peripheral surface of the cylinder serves as a ridge line portion of the electrode assembly 20.
(5) In the electrical storage devices 10 and 10A to 10C in the first to third embodiments, adhesive films (not illustrated) may be joined to the outer peripheral surfaces of the electrode terminals 30. The adhesive film can be arbitrarily selected as long as it is a film capable of bonding the electrode terminal 30 formed of a metal and the lid 60 formed of a resin. For the adhesive films, for example, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride can be used. The adhesive films can be films having a single layer or two or more layers of any of the above-mentioned resins.
(6) In the electrical storage device 10B of the third embodiment, the protective member 93 is configured separately from the outer package film 50. However, members corresponding at least the frame portions 931 of the protective member 93 may be joined to the innermost layer of the outer package film 50 in advance, such that the frame portions 931 come into contact with the ridge line portions 20A to 20D of the electrode assembly 20 when the electrode assembly 20 is wrapped by the outer package film 50. This also applies to the frame portions 940 of the electrical storage device 10C of the fourth embodiment. Note that each of the protective member 93 of the third embodiment and the protective member 94 of the fourth embodiment may be combined with the protective members 90 of the first embodiment or the protective member 91 of the second embodiment.
(7) In a case where the protective members 90 to 94 of the first to fourth embodiments have a function of suppressing deformation of the outer packaging 40 described above, the protective members 90 to 94 may be configured to intensively suppress deformation of a specific surface of the outer packaging 4 in accordance with aspects when the electrical storage devices 10 and 10A to 10C are used. As illustrated in Fig. 11, for example, the electrical storage devices 10 and 10A to 10C are used such that the plurality of electrical storage devices 10 and 10A to 10C are aligned with the fourth surfaces 44 thereof being in contact with a cooling mechanism 200. In the electrical storage devices 10 and 10A to 10C disposed as in Fig. 11, the fourth surfaces 44 are in contact with the cooling mechanism 200, the third surfaces 43 are in direct contact with the first surfaces 41 of the adjacent electrical storage devices 10 and 10A to 10C, or are in indirect contact therewith via plate-shaped members, buffering materials, or the like. Therefore, in a case where expansion is considered as an aspect of deformation of the outer packaging 40, for example, the first surfaces 41, the third surfaces 43, and the fourth surfaces 44 of the outer packagings 40 of the electrical storage devices 10 and 10A to 10C aligned as in Fig. 11 are relatively unlikely to expand even when the internal pressures of the electrical storage devices 10 and 10A to 10C rise.

On the other hand, since the second surfaces 42 of the outer packagings 40 are not in contact with other elements of the electrical storage devices 10 and 10A to 10C and the like, the second surfaces 42 are likely to expand in the case where the internal pressures of the electrical storage devices 10 and 10A to 10C rise. Therefore, in the electrical storage devices 10 and 10A, it is possible to configure the protective members 90 to 92 to suppress expansion of the second surfaces 42 by configuring them to extend in larger areas on the second surfaces 42 of the outer packagings 40. On the other hand, the electrical storage devices 10B and 10C can be configured to suppress expansion of the second surfaces 42 by joining parts of the side wall portions 930, the frame portions 931, the frame portions 940, or the lids 60 present on the rear side of the second surfaces 42 and the innermost layers of the outer package films 5 facing the parts or the like. It is thus possible to configure the protective members 90 to 94 to suppress expansion of specific surfaces of the outer packagings 40. The above configuration is similarly adopted not only for the expansion of the outer packagings 40 but also for contraction thereof.

### Reference Signs List

10, 10A, 10B, 10C Electrical storage device
20 Electrode assembly
20A to 20D Ridge line portion
30 Electrode terminal
40 Outer packaging
40A Opening part
50 Outer package film
60 Lid
90 to 94 Protective member
230 Corner

## Claims

1. An electrical storage device comprising:
an electrode assembly that has a three-dimensional shape including ridge line portions;
an outer package film that covers at least one of the ridge line portions and wraps the electrode assembly; and
a protective member that is disposed outside the electrode assembly along at least one of the ridge line portions.

2. The electrical storage device according to claim 1, wherein the protective member is disposed outside the outer package film.

3. The electrical storage device according to claim 1, wherein the protective member is disposed inside the outer package film.

4. The electrical storage device according to any one of claims 1 to 3, wherein the outer package film wraps the electrode assembly to have an opening part,
the electrical storage device further comprising a lid disposed at the opening part.

5. The electrical storage device according to claim 2, wherein the protective member is disposed inside the outer package film.

6. A protective member for an electrical storage device,
the electrical storage device including
an electrode assembly that has a three-dimensional shape including ridge line portions, and
an outer package film that covers at least one of the ridge line portions and wraps the electrode assembly,
the protective member being disposed outside the electrode assembly along at least one of the ridge line portions.
